# EUROPEAN PATENT APPLICATION

(11) **EP 4 456 169 A1**
(43) Date of publication of application: **30.10.2024**
(21) Application number: 23779170.2
(22) Date of filing: 01.03.2023
(51) Int. Cl.: H01M 4/13, H01G 11/36, H01G 11/42, H01M 4/62

(54) **POSITIVE ELECTRODE FOR POWER STORAGE ELEMENT, POWER STORAGE ELEMENT, AND POWER STORAGE DEVICE**

(30) Priority: 30.03.2022 JP 2022056426
(71) Applicant: GS Yuasa International Ltd., Kisshoin, Minami-ku, Kyoto-shi, Kyoto 601-8520 (JP)
(72) Inventor: YAMATANI, Norio, Kyoto-shi, Kyoto 601-8520 (JP)
(74) Representative: Isarpatent
(86) International application number: PCT/JP2023/007571
(87) International publication number: WO 2023/189140

(57) **Abstract**

A positive electrode for an energy storage device according to an aspect of the present invention includes a positive active material layer containing a positive active material, a particulate conductive agent, and a fibrous conductive agent, the fibrous conductive agent is 60 nm or less in diameter, a pore volume distribution of the positive active material layer has a median pore diameter of 100 nm or more, a Log differential pore volume distribution curve determined from the pore volume distribution has a first peak that appears in a pore diameter range of 10 nm or more and less than 100 nm, and a second peak that appears in a pore diameter range of 100 nm or more and less than 2000 nm, and the ratio of the height of the second peak to the height of the first peak (second peak/first peak) is 1.20 or less.

## Description

### TECHNICAL FIELD

The present invention relates to a positive electrode for an energy storage device, an energy storage device, and an energy storage apparatus.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. Also, capacitors such as lithium ion capacitors and electric double-layer capacitors, energy storage devices with electrolytes other than nonaqueous electrolyte used, and the like are also widely used as energy storage devices other than nonaqueous electrolyte secondary batteries.

The positive electrodes of the energy storage devices generally have a structure in which a positive active material layer containing a positive active material and a conductive agent is provided on a conductive substrate. As the conductive agent, carbon materials such as acetylene black are widely used. Patent Document 1 describes an energy storage device in which acetylene black and carbon nanotubes are used in combination as a conductive agent for a positive electrode.

### PRIOR ART DOCUMENT

### PATENT DOCUMENT

Patent Document 1: JP-A-2012-221672

### SUMMARY OF THE INVENTION

### PROBLEMS TO BE SOLVED BY THE INVENTION

The conventional positive electrode for an energy storage device and the energy storage device have the disadvantage that an increase in direct-current resistance in association with a charge-discharge cycle is likely to be caused.

An object of the present invention is to provide a positive electrode for an energy storage device, an energy storage device, and an energy storage apparatus, with a reduced rate of increase in direct-current resistance in association with a charge-discharge cycle.

### MEANS FOR SOLVING THE PROBLEMS

A positive electrode for an energy storage device according to an aspect of the present invention includes a positive active material layer containing a positive active material, a particulate conductive agent, and a fibrous conductive agent, the fibrous conductive agent is 60 nm or less in diameter, a pore volume distribution of the positive active material layer has a median pore diameter of 100 nm or more, a Log differential pore volume distribution curve determined from the pore volume distribution has a first peak that appears in a pore diameter range of 10 nm or more and less than 100 nm, and a second peak that appears in a pore diameter range of 100 nm or more and less than 2000 nm, and the ratio of the height of the second peak to the height of the first peak (second peak/first peak) is 1.20 or less.

An energy storage device according to another aspect of the present invention includes the positive electrode for an energy storage device according to an aspect of the present invention.

An energy storage apparatus according to another aspect of the present invention includes two or more energy storage devices, and one or more energy storage devices each including the positive electrode for an energy storage device according to an aspect of the present invention.

### ADVANTAGES OF THE INVENTION

An aspect of the present invention can provide a positive electrode for an energy storage device and an energy storage device, with a reduced rate of increase in direct-current resistance in association with a charge-discharge cycle.

Another aspect of the present invention can provide an energy storage apparatus, with a reduced rate of increase in direct-current resistance in association with a charge-discharge cycle.

### BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

### MODE FOR CARRYING OUT THE INVENTION

First, outlines of a positive electrode for an energy storage device, an energy storage device, and an energy storage apparatus disclosed in the present specification will be described.

(1) A positive electrode for an energy storage device according to an aspect of the present invention includes a positive active material layer containing a positive active material, a particulate conductive agent, and a fibrous conductive agent, the fibrous conductive agent is 60 nm or less in diameter, a pore volume distribution of the positive active material layer has a median pore diameter of 100 nm or more, a Log differential pore volume distribution curve determined from the pore volume distribution has a first peak that appears in a pore diameter range of 10 nm or more and less than 100 nm, and a second peak that appears in a pore diameter range of 100 nm or more and less than 2000 nm, and the ratio of the height of the second peak to the height of the first peak (second peak/first peak) is 1.20 or less.

In the positive electrode for an energy storage device according to (1) mentioned above, the rate of increase in direct-current resistance in association with a charge-discharge cycle is reduced. The reasons therefor are not clear, but the following reasons are presumed. The first peak is a peak corresponding to voids between particles of the particulate conductive agent, and the second peak is a peak corresponding to voids between particles of the positive active material. Further, when the voids between particles of the positive active material are sufficiently formed, the median pore diameter in the pore volume distribution of the positive active material layer is increased. In this regard, when a particulate conductive agent and a fibrous conductive agent are used in combination, with aggregation of the fibrous conductive agent with low dispersibility, the aggregated fibrous conductive agent occupies the voids between particles of the positive active material, thereby making an electrolyte (typically, an electrolyte solution) less likely to uniformly permeate between the particles of the positive active material, which is likely to cause an increase in direct-current resistance in association with a charge-discharge cycle. In addition, when the fibrous conductive agent covers the particulate conductive agent, the voids between particles of the particulate conductive agent are occupied by the fibrous conductive agent, thus making an electrolyte (typically, an electrolyte solution) less likely to be held in the voids between particles of the particulate conductive agent, which is likely to cause an increase in direct-current resistance in association with a charge-discharge cycle. Furthermore, when only the particulate conductive agent is used as the conductive agent, the point contacts between the particles of the positive active material and the particles of the conductive agent and between the particles of the conductive agent make, for example, an electron conduction path less likely to be sufficiently formed by the conductive agent, and when only the fibrous conductive agent is used as the conductive agent, for example, an electrolyte is less likely to be held in the voids between the particles of the fibrous conductive agent, and thus, an increase in direct-current resistance in association with a charge-discharge cycle is likely to be caused. In contrast, in the positive electrode for an energy storage device according to (1) mentioned above, the median pore diameter in the pore volume distribution of the positive active material layer is as large as 100 nm or more, and thus, the fibrous conductive agent is presumed to be sufficiently dispersed, thereby resulting in the sufficient formation of the voids between the particles of the positive active material. In addition, in the positive electrode for an energy storage device according to (1) mentioned above, the ratio of the height of the second peak to the height of the first peak (second peak/first peak) is 1.20 or less, that is, the first peak corresponding to the voids between the particles of the particulate conductive agent is relatively sufficiently large, and thus, the voids between the particles of the particulate conductive agent are presumed not to be much occupied by the fibrous conductive agent. Accordingly, in the positive electrode for an energy storage device according to the above (1) mentioned above, an electrolyte can uniformly penetrate between the particles of the positive active material, and the electrolyte is likely to be held in the voids between the particles of the particulate conductive agent, and thus, the rate of increase in direct-current resistance in association with a charge-discharge cycle is presumed to be reduced.

The "particulate conductive agent" refers to a granular conductive agent. The ratio of the major axis to the minor axis of the particulate conductive agent is 1 or more and less than 10. The minor axis and major axis of the particulate conductive agent are based on a scanning electron microscope (SEM) or transmission electron microscope (TEM) image in a cross-sectional view of the positive active material layer. The shortest diameter passing through the center of the minimum circumscribed circle of the particulate conductive agent is defined as a minor axis, and the diameter passing through the center and orthogonal to the minor axis is defined as a major axis. When there are two or more shortest diameters, the shortest diameter with the longest orthogonal diameter is defined as the minor axis. The particulate conductive agent may be a granular conductive agent that is not substantially deformed.

The "fibrous conductive agent" refers to a conductive agent that has a deformable elongated shape. The ratio of the length to the diameter (fiber diameter) of the fibrous conductive agent is 10 or more. The diameter and length of the fibrous conductive agent are based on an SEM or TEM image in a cross-sectional view of the positive active material layer.

The "pore volume distribution" of the positive active material layer is measured by a mercury intrusion method based on the following conditions with the use of a pore distribution measuring apparatus ("AutoPore 9400" manufactured by Micromeritics Instruments Corporation). The contact angle of mercury is set to 130°, and the surface tension thereof is set to 484 dynes/cm. The pore diameter range to be measured is 5.5 nm to 20 µm. The number of measurement points in the pore diameter range to be measured is 40 points. The pore diameter (pore diameter) and the pore volume are plotted respectively on the horizontal axis and the vertical axis to obtain a cumulative pore volume curve. The median pore diameter is determined from the cumulative pore volume curve. Next, the value obtained by dividing the difference volume dV between the measurement points by the logarithmic differential value d (logD) of the pore diameter is determined, and this value is plotted against the average pore diameter of each section to obtain a Log differential pore volume curve. It is to be noted that the feature "the Log differential pore volume curve has a first peak that appears in a pore diameter range of 10 nm or more and less than 100 nm, and a second peak that appears in a pore diameter range of 100 nm or more and less than 2000 nm" means that the Log differential pore volume curve has a local maximum value in each of the pore diameter ranges. Further, when the positive electrode for an energy storage device is incorporated in an energy storage device, a sample of the positive active material layer to be subjected to the measurement of the pore volume distribution is prepared by the following method. The energy storage device is discharged at a current of 0.1 C until reaching an end-of-discharge voltage under normal usage, and thus brought into a discharged state. In this regard, the term "under normal usage" means a case of using the energy storage device while employing discharge conditions recommended or specified in the energy storage device. The energy storage device in the discharged state is disassembled, the positive electrode is taken out, and then, a half battery is assembled with the positive electrode as a working electrode and metal Li as a counter electrode, and discharged at a current of 0.1 C until the positive electrode potential reaches 3.0 V (vs. Li/Li⁺). The half battery is disassembled, and the positive electrode taken out is sufficiently washed with a dimethyl carbonate, and then dried under reduced pressure at room temperature for 24 hours. The dried positive electrode is cut into a predetermined size (for example, 2 × 2 cm), and used as a sample in the measurement of the pore volume distribution. The operations from disassembling the energy storage device to preparing the sample in the measurement of the pore volume distribution are performed in a dry air atmosphere with a dew point of -40°C or lower.

(2) In the positive electrode for an energy storage device according to (1) mentioned above, the first peak may have a height of 0.054 mL/g or more. In the positive electrode for an energy storage device according to (2) mentioned above, an electrolyte is more likely to be held in the voids between particles of the particulate conductive agent, thereby further reducing the rate of increase in direct-current resistance in association with a charge-discharge cycle.

(3) In the positive electrode for an energy storage device according to (1) or (2) mentioned above, the content of the fibrous conductive agent with respect to the positive active material may be 0.10% by mass or more and 2% by mass or less. In the positive electrode for an energy storage device according to (3) mentioned above, the fibrous conductive agent is capable of sufficiently covering the surfaces of the respective particles of the positive active material, as a result, for example, a good electron conduction path is formed, and the voids between the respective particles of the positive active material are kept from being reduced by the excessively present fibrous conductive agent, and thus, the rate of increase in direct-current resistance in association with a charge-discharge cycle is further reduced.

(4) In the positive electrode for an energy storage device according to any one of (1) to (3) mentioned above, the particulate conductive agent may be carbon black, and the fibrous conductive agent may be fibrous carbon. In the positive electrode for an energy storage device according to (4) mentioned above, for example, an electrolyte is particularly likely to be held in the voids between particles of the carbon black, a particularly good electron conduction path is formed by the fibrous carbon, and thus, the rate of increase in direct-current resistance in association with a charge-discharge cycle is further reduced.

The "fibrous carbon" refers to a fibrous conductive agent that is a carbonaceous material. The carbonaceous material refers to a material in which the main component element (the highest content of element on a mass basis) is a carbon element. The content of the carbon element in the carbonaceous material is, for example, 70% by mass or more, preferably 90% by mass or more, more preferably 95% by mass or more. Examples of elements other than carbon, which may be contained in the carbonaceous material, include an oxygen element and a hydrogen element.

(5) An energy storage device according to another aspect of the present invention includes the positive electrode for an energy storage device according to any one of (1) to (4) mentioned above. In the energy storage device according to (5) mentioned above, the rate of increase in direct-current resistance in association with a charge-discharge cycle is reduced. Accordingly, the energy storage device according to (5) mentioned above has a long charge-discharge cycle life, and for example, can maintain good performance for a long period of time.

(6) An energy storage apparatus according to another aspect of the present invention includes two or more energy storage devices, and one or more energy storage devices each including the positive electrode for an energy storage device according to any one of (1) to (4) mentioned above.

The energy storage apparatus according to (6) mentioned above includes the energy storage device that has a reduced rate of increase in direct-current resistance in association with a charge-discharge cycle, has a long charge-discharge cycle life, and for example, can maintain good performance for a long period of time, and thus has a reduced rate of increase in direct-current resistance in association with a charge-discharge cycle, and has a long charge-discharge cycle life, and for example, can maintain good performance for a long period of time.

Hereinafter, an electrode for an energy storage device according to an embodiment of the present invention, a method for manufacturing the positive electrode for an energy storage device, an energy storage device, an energy storage apparatus, a method for manufacturing the energy storage device, and other embodiments will be described in detail. It is to be noted that the names of the respective constituent members (respective constituent elements) for use in the respective embodiments may be different from the names of the respective constituent members (respective constituent elements) for use in the background art.

### <Positive electrode for energy storage device>

A positive electrode for an energy storage device (hereinafter, also referred to simply as a "positive electrode") according to one embodiment of the present invention includes a positive substrate and a positive active material layer disposed directly on the positive substrate, or over the positive substrate with an intermediate layer interposed therebetween.

The positive substrate has conductivity. Whether the positive substrate has "conductivity" or not is determined with the volume resistivity of 10⁻² Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. The average thickness of the positive substrate falls within the range mentioned above, thereby making it possible to increase the energy density per volume of the energy storage device while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material, a particulate conductive agent, and a fibrous conductive agent. The positive active material layer contains optional components such as a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an α-NaFeO₂-type crystal structure, lithium-transition metal oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < B, 0.5 < γ + β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ + β < 1, 0 < 1-x-γ-β). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used alone, or two or more thereof may be used in mixture.

As the positive active material, a lithium-transition metal composite oxide is preferable, a lithium-transition metal composite oxide containing a nickel element, a cobalt, and a manganese or aluminum element is more preferable, and a lithium-transition metal composite oxide containing a nickel element, a cobalt element, and a manganese element is still more preferable. The lithium-transition metal composite oxide preferably has an α-NaFeO₂-type crystal structure. The use of such a lithium-transition metal composite oxide allows the energy density to be increased, for example.

One of the materials for the positive active material may be used alone, or two or more thereof may be used in mixture. Above all, the positive active material preferably contains the lithium-transition metal composite oxide in a proportion of 50% by mass or more (preferably 70 to 100% by mass, more preferably 80 to 100% by mass) of all of the positive active materials to be used, and it is more preferable to use a positive active material substantially composed only of the lithium-transition metal composite oxide.

The positive active material is typically particles (powder). The average particle size of the positive active material is preferably 0.1 pm or more and 20 pm or less, for example. When the average particle size of the positive active material is equal to or more than the lower limit mentioned above, the positive active material is easily manufactured or handled. When the average particle size of the positive active material is equal to or less than the upper limit mentioned above, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer is preferably 50% by mass or more and 99% by mass or less, more preferably 70% by mass or more and 98% by mass or less, still more preferably 80% by mass or more and 97% by mass or less, even more preferably 90% by mass or more and 96% by mass or less, and may be even more preferably 92% by mass or more and 94% by mass or less in some cases. When the content of the positive active material falls within the range mentioned above, a balance can be achieved between the increased energy density and manufacturability of the positive active material layer. In particular, in the positive electrode according to the present embodiment, the particulate conductive agent and the fibrous conductive agent are used in combination as the conductive agent, and thus a good electron conduction path can be formed even when the content of the conductive agent is relatively low. Accordingly, in the positive electrode, the content of the positive active material can be increased, and the energy density can be increased.

Examples of the particulate conductive agent include a particulate metal, a particulate conductive resin, a particulate conductive ceramic, and particulate carbon, and among these examples, particulate carbon is preferable. The particulate carbon refers to a particulate conductive agent that is a carbonaceous material. Examples of the particulate carbon (particulate conductive agent that is a carbonaceous material) include particulates of graphite, non-graphitic carbon, and graphene-based carbon. Examples of the particulate non-graphitic carbon include carbon black. Examples of the carbon black include furnace black, acetylene black, and ketjen black. Examples of the particulate graphene-based carbon include fullerene. Among these examples, non-graphitic carbon is preferable, and carbon black is more preferable.

The particulate conductive agent is composed of primary particles, and the primary particles are preferably present in an aggregated state. The average particle size of the primary particles of the particulate conductive agent is, for example, 10 nm or more and 500 nm or less, more preferably 20 nm or more and 100 nm or less. The use of the particulate conductive agent in such a size allows, for example, the electron conductivity of the positive active material layer to be increased, and an electrolyte to be sufficiently held in the voids between particles of the particulate conductive agent. The "average particle size" of the primary particles of the particulate conductive agent is the average value of the particle sizes of arbitrary ten primary particles of the particulate conductive agent observed with an SEM or a TEM. The particle size of the primary particle of the particulate conductive agent is the average value of the major axis and the minor axis.

The average aspect ratio of the particulate conductive agent is 1 or more and less than 10, and is preferably, for example, 6 or less, 3 or less, 2 or less, or 1.5 or less. The "average aspect ratio" of the particulate conductive agent is the average value of the respective aspect ratios (the ratio of the major axis to the minor axis) of arbitrary ten particles of the particulate conductive agent observed with an SEM or a TEM. In addition, when the particulate conductive agent is preset with the primary particles aggregated, the average aspect ratio of the particulate conductive agent is defined as the average aspect ratio of the primary particles.

The content of the particulate conductive agent in the positive active material layer is, for example, preferably 0.1% by mass or more and 10% by mass or less, more preferably 0.5% by mass or more and 6% by mass or less, still more preferably 1% by mass or more and 5% by mass or less, and may be even more preferably 2% by mass or more and 4% by mass or less in some cases. The content of the particulate conductive agent is set to be equal to or more than the lower limit mentioned above, thereby allowing the electron conductivity of the positive active material layer to be increased to further reduce the rate of increase in direct-current resistance in association with a charge-discharge cycle. In contrast, the content of the particulate conductive agent is set to be equal to or less than the upper limit mentioned above, thereby allowing the content of the positive active material to be relatively increased to increase the energy density while sufficiently reducing the rate of increase in direct-current resistance in association with a charge-discharge cycle.

Examples of the fibrous conductive agent include a fibrous metal, a fibrous conductive resin, and fibrous carbon, and among these examples, fibrous carbon is preferable. Examples of the fibrous carbon (fibrous conductive agent that is a carbonaceous material) include carbon fibers, pitch-based carbon fibers, and carbon nanotubes (CNTs), and CNTs can be suitably used.

The average diameter (average fiber diameter) of the fibrous conductive agent is, for example, preferably 0.5 nm or more and 60 nm or less, more preferably 1 nm or more and 55 nm or less, still more preferably 2 nm or more and 50 nm or less, even more preferably 3 nm or more and 45 nm or less, even more preferably 4 nm or more and 40 nm or less. The average diameter of the fibrous conductive agent falls within the range mentioned above, thereby improving the electron conductivity of the positive active material layer, and further reducing the rate of increase in direct-current resistance in association with a charge-discharge cycle. It is to be noted that the "average diameter" of the fibrous conductive agent is the average value of the diameters of arbitrary ten fibers of the fibrous conductive agent observed with an SEM or a TEM.

The average aspect ratio (the ratio of the average length to the average diameter) of the fibrous conductive agent is 10 or more, and for example, preferably 10 or more and 10,000 or less, more preferably 100 or more, still more preferably 1,000 or more. The use of the fibrous conductive agent with the average aspect ratio in the range mentioned above allows the electron conductivity of the positive active material layer to be further improved. It is to be noted that the "average length" of the fibrous conductive agent is defined as the average value of the lengths of arbitrary ten particles of the fibrous conductive agent observed with an SEM or a TEM. In the calculation of the average aspect ratio, the ten particles of the fibrous conductive agent for determining the average diameter are preferably the same as the ten particles of the fibrous conductive agent for determining the average length, but the average diameter and the average length may be each determined for ten different particles of the fibrous conductive agent, and the ratio of the average length to the average diameter may be defined as the average aspect ratio. More specifically, the average aspect ratio refers to the average value of the respective aspect ratios of arbitrary ten particles of the fibrous conductive agent observed with an SEM or a TEM, or the ratio of the average length of arbitrary ten particles of the fibrous conductive agent observed with an SEM or a TEM to the average diameter of arbitrary ten different particles of the fibrous conductive agent observed therewith.

When the fibrous conductive agent is fibrous carbon, the average lattice spacing (d₀₀₂) of a (002) plane of the fibrous carbon, determined by an X-ray diffraction method with the use of a CuKα ray, is preferably less than 0.340 nm. When the average lattice spacing (d₀₀₂) of the fibrous carbon is small with a high degree of crystallinity as described above, the electron conductivity of the positive active material layer is further increased. It is to be noted that the lower limit of the average lattice spacing (d₀₀₂) of the fibrous carbon can be, for example, 0.330 nm. In addition, the full width at half maximum (002) of a peak corresponding to the (002) plane of the fibrous carbon, determined by X-ray diffraction with the use of a CuKα ray, is, for example, 0.5° or more. The full width at half maximum (002) of the fibrous carbon is preferably less than 0.7°.

Fibrous carbon can be obtained by, for example, a method in which a polymer is formed into a fibrous form by a spinning method or the like and heat-treated under an inert atmosphere, a vapor phase growth method in which an organic compound is reacted at a high temperature in the presence of a catalyst, or the like. Commercially available fibrous carbon and other fibrous conductive agents can be used.

The content of the fibrous conductive agent in the positive active material layer is, for example, preferably 0.05% by mass or more and 5% by mass or less, more preferably 0.1% by mass or more and 3% by mass or less, still more preferably 0.2% by mass or more and 2% by mass or less, even more preferably 0.4% by mass or more and 1.0% by mass or less, and may be even more preferably 0.5% by mass or more and 0.8% by mass or less in some cases. The content of the fibrous conductive agent is set to be equal to or more than the lower limit mentioned above, thereby allowing the electron conductivity of the positive active material layer to be further increased to further reduce the rate of increase in direct-current resistance in association with a charge-discharge cycle. In contrast, the content of the fibrous conductive agent is set to be equal to or less than the upper limit mentioned above, thereby allowing the content of the positive active material to be relatively increased to increase the energy density while sufficiently reducing the rate of increase in direct-current resistance in association with a charge-discharge cycle. In addition, the content of the fibrous conductive agent is set to be equal to or less than the upper limit mentioned above, production cost can also be reduced.

The content of the fibrous conductive agent with respect to the positive active material (fibrous conductive agent/positive active material) is preferably 0.10% by mass or more and 2% by mass or less, more preferably 0.2% by mass or more and 1.5% by mass or less, still more preferably 0.3% by mass or more and 1.2% by mass or less, even more preferably 0.4% by mass or more and 1.0% by mass or less, even more preferably 0.5% by mass or more and 0.8% by mass or less. The content of the fibrous conductive agent with respect to the positive active material is equal to or more than the lower limit mentioned above, thereby allowing the fibrous conductive agent to sufficiently cover the surfaces of the particles of the positive active material, and as a result, a good electron conduction path is formed, thereby allowing the rate of increase in direct-current resistance in association with a charge-discharge cycle to be further reduced. In contrast, the content of the fibrous conductive agent with respect to the positive active material is equal to or less than the upper limit mentioned above, thereby, for example, keeping the voids between particles of the positive active material from being occupied by the excessively present fibrous conductive agent, and thus, the rate of increase in direct-current resistance in association with a charge-discharge cycle is further reduced.

The content of the fibrous conductive agent with respect to the total content of the fibrous conductive agent and the particulate conductive agent in the positive active material layer is preferably 1% by mass or more and 90% by mass or less, more preferably 3% by mass or more and 70% by mass or less, still more preferably 5% by mass or more and 50% by mass or less, even more preferably 10% by mass or more and 30% by mass or less. The content of the fibrous conductive agent with respect to the total content of the fibrous conductive agent and the particulate conductive agent falls within the range mentioned above, thereby optimizing the mixing ratio between the fibrous conductive agent and the particulate conductive agent to further improve the electron conduction path formed in the positive active material layer, and as a result, the rate of increase in direct-current resistance in association with a charge-discharge cycle is further reduced.

The total content of the particulate conductive agent and the fibrous conductive agent in the positive active material layer is preferably 0.3% by mass or more and 10% by mass or less, more preferably 1% by mass or more and 8% by mass or less, still more preferably 2% by mass or more and 6% by mass or less, even more preferably 3% by mass or more and 5% by mass or less. The total content of the particulate conductive agent and the fibrous conductive agent in the positive active material layer is set to be equal to or more than the lower limit mentioned above, thereby allowing the electron conductivity of the positive active material layer to be further increased to further reduce the rate of increase in direct-current resistance in association with a charge-discharge cycle. In contrast, the total content of the particulate conductive agent and the fibrous conductive agent is set to be equal to or less than the upper limit mentioned above, thereby allowing the content of the positive active material to be relatively increased to increase the energy density while sufficiently reducing the rate of increase in direct-current resistance in association with a charge-discharge cycle.

The positive active material layer may contain therein a conductive agent other than the particulate conductive agent and the fibrous conductive agent. However, the conductive agent in the positive active material layer is preferably substantially composed of the particulate conductive agent and the fibrous conductive agent. For example, the total content of the particulate conductive agent and the fibrous conductive agent with respect to all of the conductive agents in the positive active material layer is preferably 90% by mass or more, further preferably 99% by mass or more.

The content of all of the conductive agents in the positive active material layer is preferably 0.3% by mass or more and 10% by mass or less, more preferably 1% by mass or more and 8% by mass or less, still more preferably 2% by mass or more and 6% by mass or less, even more preferably 3% by mass or more and 5% by mass or less. The content of all of the conductive agents in the positive active material layer is set to be equal to or more than the lower limit mentioned above, thereby allowing the electron conductivity of the positive active material layer to be further increased to further reduce the rate of increase in direct-current resistance in association with a charge-discharge cycle. In contrast, the content of all of the conductive agents is set to be equal to or less than the upper limit mentioned above, thereby allowing the content of the positive active material to be relatively increased to increase the energy density while sufficiently reducing the rate of increase in direct-current resistance in association with a charge-discharge cycle.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers. Among these examples, fluororesins are preferable, and PVDF is more preferable.

The content of the bonder in the positive active material layer is preferably 0.3% by mass or more and 10% by mass or less, more preferably 0.5% by mass or more and 8% by mass or less, still more preferably 1% by mass or more and 5% by mass or less, and may be even more preferably 3% by mass or more or 2% by mass or more in some cases. The content of the binder is set to be equal to or more than the lower limit mentioned above, thereby allowing the positive active material to be stably held. In addition, the content of the binder is set to be equal to or less than the upper limit mentioned above, thereby allowing the content of the positive active material to be increased to increase the energy density.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance. In the case of using a thickener, the content of the thickener in the positive active material layer is preferably 5% by mass or less, further preferably 1% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In the case of using a filler, the content of the filler in the positive active material layer is preferably 5% by mass or less, and more preferably 1% by mass or less. The technique disclosed herein can be preferably carried out in an aspect in which the positive active material layer contains no filler.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agents, the binder, the thickener, and the filler.

The lower limit of the median pore diameter in the pore volume distribution of the positive active material layer is 100 nm, and is preferably 105 nm, and may be more preferably 110 nm, 115 nm, or 120 nm in some cases. The median pore diameter is equal to or more than the lower limit mentioned above, thereby causing the voids between particles of the positive active material to be sufficiently formed, and allowing an electrolyte to uniformly penetrate between the particles of the positive active material, and as a result, the rate of increase in direct-current resistance in association with a charge-discharge cycle is reduced. The upper limit of the median pore diameter may be, for example, 200 nm, 150 nm, or 130 nm. The median pore diameter is equal to or less than the upper limit mentioned above, thereby appropriately reducing the distances between particles of the positive active material, and thus, the content of the positive active material in the positive active material layer can be increased, and the energy density can be increased. Furthermore, the electron conduction path is kept form being less likely to be sufficiently formed by the particulate conductive agent and the fibrous conductive agent due to the excessively increased distances between the particles of the positive active material, and the rate of increase in direct-current resistance in association with a charge-discharge cycle is further reduced. The median pore diameter may be equal to or more than any of the lower limits mentioned above and equal to or less than any of the upper limits mentioned above. The median pore diameter is controlled with the composition ratio of each of the components constituting the positive active material layer, the shape of each of the components, the dispersion state of each of the component, and the like. It is to be noted that even when an identical component is used, the median pore diameter tends to be increased when the fibrous conductive agent is sufficiently dispersed as described later.

The Log differential pore volume distribution curve determined from the pore volume distribution of the positive active material layer has a first peak that appears in a pore diameter range of 10 nm or more and less than 100 nm, and a second peak that appears in a pore diameter range of 100 nm or more and less than 2000 nm.

The first peak is a peak corresponding to the voids between particles of the particulate conductive agent. The range (peak position) in which the first peak appears is preferably a range of 30 nm or more and 90 nm or less, more preferably a range of 40 nm or more and 80 nm or less. The height of the first peak is preferably 0.054 mL/g or more and 0.100 mL/g or less, more preferably 0.056 mL/g or more and 0.080 mL/g or less, still more preferably 0.060 mL/g or more and 0.070 mL/g or less. When the height of the first peak falls within the range mentioned above, an electrolyte is more likely to be held in the voids between particles of the particulate conductive agent, thereby further reducing the rate of increase in direct-current resistance in association with a charge-discharge cycle.

The second peak is a peak corresponding to the voids between particles of the positive active material. The range (peak position) in which the second peak appears is preferably a range of 150 nm or more and 1000 nm or less, more preferably a range of 200 nm or more and 500 nm or less, still more preferably a range of 250 nm or more and 400 nm or less. The height of the second peak may be, for example, 0.03 mL/g or more and 0.10 mL/g or less, or 0.04 mL/g or more and 0.08 mL/g or less.

The upper limit of the ratio of the height of the second peak to the height of the first peak (hereinafter, also referred to as a "peak height ratio (second peak/first peak)") is 1.20, and is preferably 1.15, more preferably 1.10, still more preferably 1.05. When the peak height ratio (second peak/first peak) is equal to or less than the upper limit mentioned above, the voids between the particles of the particulate conductive agent are not much occupied by the fibrous conductive agent, and an electrolyte is likely to be held in the voids between the particles of the particulate conductive agent, and thus, the rate of increase in direct-current resistance in association with a charge-discharge cycle is reduced. The lower limit of the peak height ratio (second peak/first peak) may be, for example, 0.50, and may be 0.60, 0.70, 0.80, 090, or 1.00. The peak height ratio (second peak/first peak) may be equal to or more than any of the lower limits mentioned above and equal to or less than any of the upper limits mentioned above.

The positive electrode including the positive active material layer that has such a pore distribution can be effectively obtained by preparing a positive composite paste such that the positive active material is covered with the fibrous conductive agent sufficiently dispersed, and such that the particulate conductive agent is not much covered with the fibrous conductive agent much, and fabricating the positive active material layer with the use of such a positive composite paste. A suitable method for manufacturing the positive electrode will be described later.

The Log differential pore volume curve of the positive active material layer preferably has, in the range of a pore diameter of 5.5 nm or more and less than 20 pm, no appearing peak that is higher than the first peak and the second peak, more preferably no appearing peak that is higher than the half height of the first peak and the half height of the second peak.

The total pore volume of the positive active material layer is preferably 0.05 mL/g or more and 0.20 mL/g or less, more preferably 0.06 mL/g or more and 0.15 mL/g or less, still more preferably 0.08 mL/g or more and 0.12 mL/g or less. When the total pore volume of the positive active material layer falls within the range mentioned above, the rate of increase in direct-current resistance in association with a charge-discharge cycle is further reduced. The "total pore volume" of the positive active material layer can be determined by measuring the pore volume distribution of the positive active material layer mentioned above.

### <Method for manufacturing positive electrode for energy storage device>

The positive electrode can be fabricated, for example, by applying a positive composite paste to a positive substrate directly or with an intermediate layer interposed therebetween, and drying the paste. The positive composite paste includes respective components constituting the positive active material layer, such as the positive active material, the particulate conductive agent, and the fibrous conductive agent, and a binder as an optional component. The positive composite paste typically further includes a dispersion medium. As the dispersion medium, an organic solvent is suitably used. Examples of the organic solvent that is a dispersion medium for use in preparing the positive composite paste include N-methylpyrrolidone (NMP) and toluene.

In the preparation of the positive composite paste, for example, it is preferable to prepare a dispersion including the fibrous conductive agent first, add the positive active material to the dispersion, and then add the particulate conductive agent. More specifically, as for the order of mixing the positive active material, the particulate conductive agent, and the fibrous conductive agent, it is preferable to first mix the positive electrode active material and the fibrous conductive agent, and then mix the particulate conductive agent. When the paste is prepared in such an order, first, the fibrous conductive agent covers the surface of the positive active material, and thus, the voids between particles of the particulate conductive agent are kept from being occupied by the fibrous conductive agent, and a positive active material layer with the peak height ratio (second peak/first peak) of 1.20 or less tends to be obtained.

In addition, the dispersion liquid including the fibrous conductive agent and the like is sufficiently stirred, thereby keeping the fibrous conductive agent from being aggregated, and a positive active material layer of 100 nm or more in median pore diameter tends to be obtained. This stirring may be performed, for example, for a dispersion including the positive active material and the fibrous conductive agent, or may be performed for a dispersion including the positive active material, the fibrous conductive agent, and the particulate conductive agent. The stirring can be suitably performed under stirring conditions of: the number of rotations of 5000 rpm or more and 10,000 rpm or less; and the stirring time of 10 seconds or longer and 30 seconds or shorter with the use of, for example, a stirring apparatus such as a thin-film spin system high-speed mixer.

### <Energy storage device>

An energy storage device according to an embodiment of the present invention includes: an electrode assembly including a positive electrode, a negative electrode, and a separator; an electrolyte; and a case that houses the electrode assembly and the electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The electrolyte is present with the positive electrode, negative electrode, and separator impregnated with the electrolyte. The electrolyte is preferably an electrolyte solution. The electrolyte solution is a liquid electrolyte. The electrolyte solution includes, for example, a solvent and an electrolyte salt dissolved in the solvent. The electrolyte solution may be an ionic liquid or the like. When the electrolyte is an electrolyte solution, the effects of the positive electrode and energy storage device according to an aspect of the present invention are particularly remarkably achieved.

As an example of the energy storage device, a nonaqueous electrolyte secondary battery (hereinafter, also referred to simply as a "secondary battery") with a nonaqueous electrolyte used for the electrolyte will be described.

### (Positive electrode)

The positive electrode included in the energy storage device is the above-described positive electrode according to an embodiment of the present invention.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate falls within the range mentioned above, the energy density per volume of the energy storage device can be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode. The conductive agent for use in the negative active material layer may be one or both of a particulate conductive agent and a fibrous conductive agent, and may be another conductive agent. The negative active material layer may be a layer substantially composed of only a negative active material such as metal Li.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer, one of these materials may be used alone, or two or more thereof may be used in mixture.

The term "graphite" refers to a carbon material in which the average lattice spacing (d₀₀₂) of a (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing (d₀₀₂) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" of the carbon material means a state discharged such that lithium ions that can be occluded and released in association with charge-discharge are sufficiently released from the carbon material that is a negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the negative active material layer is improved. A crusher, a classifier, or the like is used in order to obtain a powder with a predetermined particle size. The crushing method and the classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

### (Separator)

The separator can be appropriately selected from known separators. As the separator, for example, a separator composed of only a substrate layer, a separator where a heat resistant layer including heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, further preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned above, thereby making it possible to improve capacity retention performance or cycle performance after high-temperature storage, and to further improve safety.

For the nonaqueous electrolyte, a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include sulfide solid electrolytes, oxide solid electrolytes, nitride solid electrolytes, and polymer solid electrolytes.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the energy storage device according to the present embodiment is not to be considered particularly limited, and examples thereof include cylindrical batteries, prismatic batteries, flattened batteries, coin batteries and button batteries.

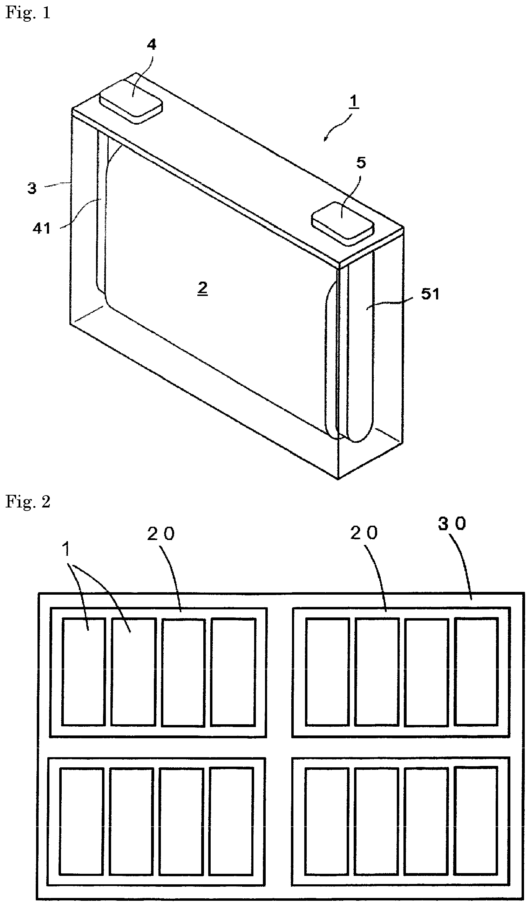

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The energy storage device according to the present embodiment can be mounted as an energy storage unit (battery module) configured with a plurality of energy storage devices assembled, on power sources for automobiles such as electric vehicles (EVs), hybrid vehicles (HEVs), and plug-in hybrid vehicles (PHEVs), power sources for electronic devices such as personal computers and communication terminals, power sources for power storage, or the like. In this case, the technique of the present invention may be applied to at least one energy storage device included in the energy storage unit.

An energy storage apparatus according to an embodiment of the present invention includes two or more energy storage devices, and includes one or more energy storage devices each including the positive electrode for an energy storage device according to an embodiment of the present invention (hereinafter, referred to as a "second embodiment"). The technique according to an embodiment of the present invention may be applied to at least one energy storage device included in the energy storage apparatus according to the second embodiment, and the energy storage apparatus may include one energy storage device including the positive electrode for an energy storage device according to an embodiment of the present invention and include one or more energy storage devices that are not according to an embodiment of the present invention, or may include two or more energy storage devices each including the positive electrode for an energy storage device according to an embodiment of the present invention.

Fig. 2 illustrates an example of an energy storage apparatus 30 according to the second embodiment, obtained by further assembling energy storage units 20 that each have two or more electrically connected energy storage devices 1 assembled. The energy storage apparatus 30 may include a busbar (not shown) that electrically connects two or more energy storage devices 1, a busbar (not shown) that electrically connects two or more energy storage units 20, and the like. The energy storage unit 20 or the energy storage apparatus 30 may include a state monitor (not shown) that monitors the state of one or more energy storage devices.

### <Method for manufacturing energy storage device>

A method for manufacturing the energy storage device of the present embodiment can be appropriately selected from known methods. The manufacturing method includes, for example, preparing an electrode assembly, preparing an electrolyte, and housing the electrode assembly and the electrolyte in a case. Preparing the electrode assembly includes: preparing a positive electrode and a negative electrode, and forming an electrode assembly by stacking or winding the positive electrode and the negative electrode with a separator interposed therebetween.

Housing the electrolyte in a case can be appropriately selected from known methods. For example, in the case of using an electrolyte solution for the electrolyte, the electrolyte solution may be injected from an inlet formed in the case, and the inlet may be then sealed.

### <Other embodiments>

It is to be noted that the energy storage device according to the present invention is not to be considered limited to the embodiment mentioned above, and various changes may be made without departing from the scope of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, dimensions, capacity, and the like of the energy storage device are arbitrary. The present invention can also be applied to various secondary batteries, and capacitors such as electric double layer capacitors and lithium ion capacitors. In addition, the positive electrode for an energy storage device and the energy storage device according to the present invention can also be applied to an energy storage device in which the electrolyte is an electrolyte other than the nonaqueous electrolyte.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples, but the present invention is not to be considered limited to the following examples.

### [Example 1]

### (Fabrication of positive electrode)

Prepared were: a lithium-transition metal composite oxide (NCM) represented by LiNi_{0.6}Co_{0.2}Mn_{0.2}O₂ as a positive active material, carbon black (CB: 35 nm in average particle size, with an average aspect ratio of 1.1) as a particulate conductive agent, CNT (7 nm in average diameter, about 60 to 100 pm in average length) as a fibrous conductive agent, and a polyvinylidene fluoride (PVDF) as a binder.

First, a dispersion containing the CNT and the PVDF with N-methylpyrrolidone (NMP) as a dispersion medium was prepared. To this dispersion, the positive active material (NCM) was added, and the dispersion was mixed at a rotational speed of 7600 rpm for 20 seconds with the use of a thin-film spin system high-speed mixer ("FILMIX" (registered trademark) manufactured by PRIMIX Corporation). Thereafter, to this dispersion, the CB was further added, and the dispersion was then mixed at a rotational speed of 2000 rpm for 5 minutes with the use of a hybrid mixer ("AWATORI RENTARO" (registered trademark) manufactured by THINKY CORPORATION) to prepare a positive composite paste. The respective components were used such that the ratios by mass of the positive active material, CB, CNT, and PVDF in the obtained positive composite paste was 94.5 : 3.4 : 0.6 : 1.5 in terms of solid content. The positive composite paste obtained was applied onto a surface of an aluminum foil that served as a positive substrate, and dried to prepare a positive active material layer. Thereafter, roll pressing was performed to obtain a positive electrode according to Example 1.

### (Fabrication of negative electrode)

Prepared was a negative composite paste including graphite as a negative active material, a styrene butadiene rubber (SBR) as a binder, and a carboxymethyl cellulose (CMC) as a thickener at ratios by mass of 96 : 3 : 1 (in terms of solid content) with water as a dispersion medium. The negative composite paste obtained was applied onto a surface of a copper foil that served as a negative substrate, and dried to form a negative active material layer. Thereafter, roll pressing was performed to obtain a negative electrode.

### (Preparation of nonaqueous electrolyte)

A nonaqueous electrolyte was prepared by dissolving LiPFs of 1.0 mol/dm³ in concentration in a nonaqueous solvent obtained by mixing an ethylene carbonate (EC), an ethyl methyl carbonate (EMC), and a dimethyl carbonate (DMC) at ratios by volume of 30 : 35 : 35.

### (Assembly of energy storage device)

The positive electrode and the negative electrode were stacked with a polyethylene separator interposed therebetween to fabricate an electrode assembly. The electrode assembly was housed in a case, and the nonaqueous electrolyte was injected into the case to obtain an energy storage device according to Example 1.

### [Example 2]

A positive electrode and an energy storage device according to Example 2 were obtained similarly to Example 1 except for the procedure for preparing the positive composite paste as follows.

First, a dispersion containing the CNT and the PVDF with NMP as a dispersion medium was prepared. To this dispersion, the positive active material (NCM) was added, and the CB was further added thereto. After adding all of the components, the dispersion was mixed at a rotational speed of 7600 rpm for 20 seconds with the use of a thin-film spin system high-speed mixer ("FILMIX" (registered trademark) manufactured by PRIMIX Corporation) to prepare a positive composite paste.

### [Comparative Example 1]

A positive electrode and an energy storage device according to Comparative Example 1 were obtained similarly to Example 1 except for mixing at a rotational speed of 2000 rpm for 5 minutes with the use of the hybrid mixer ("AWATORI RENTARO" (registered trademark) manufactured by THINKY CORPORATION) in place of the thin-film spin system high-speed mixer.

### [Comparative Example 2]

A positive electrode and an energy storage device according to Comparative Example 2 were obtained similarly to Example 1 except for the procedure for preparing the positive composite paste as follows.

First, a dispersion containing the CB and the PVDF with NMP as a dispersion medium was prepared. To this dispersion, the positive active material (NCM) was added, and the CNT and the PVDF were further added thereto. After adding all of the components, the dispersion was mixed at a rotational speed of 7600 rpm for 20 seconds with the use of a thin-film spin system high-speed mixer ("FILMIX" (registered trademark) manufactured by PRIMIX Corporation) to prepare a positive composite paste.

### [Comparative Example 3]

A positive electrode and an energy storage device according to Comparative Example 3 were obtained similarly to Example 1 except for the procedure for preparing the positive composite paste as follows.

The positive active material (NCM), the CB, and the PVDF were added to the NMP as a dispersion medium, and the dispersion was mixed at a rotational speed of 2000 rpm for 5 minutes with the use of a hybrid mixer ("AWATORI RENTARO" (registered trademark) manufactured by THINKY CORPORATION) to prepare a positive composite paste. The ratios by mass of the positive active material, CB, and PVDF were set to 94.5 : 4.0 : 1.5 in terms of solid content.

### [Comparative Example 4]

A positive electrode and an energy storage device according to Comparative Example 4 were obtained similarly to Example 1 except for the procedure for preparing the positive composite paste as follows.

The positive active material (NCM), the CB, and the PVDF were added to the NMP as a dispersion medium, and the dispersion was mixed at a rotational speed of 100 rpm for 30 minutes with the use of a planetary mixer ("PVML-25" manufactured by ASADA IRON WORKS. Co., Ltd.) to prepare a positive composite paste. The ratios by mass of the positive active material, CB, and PVDF were set to 92.5 : 5.0 : 2.5 in terms of solid content.

### [Measurement]

For each of the positive electrodes obtained, the pore volume distribution of the positive active material layer was measured by the method mentioned above to determine the total pore volume and the median pore diameter. In addition, a Log differential pore volume distribution curve was obtained from the pore volume distribution to determine the positions and heights of the first peak and second peak, and the peak height ratio (second peak/first peak). The measurement results are shown in Table 1.

### [Evaluation]

### (Initial charge-discharge)

The obtained respective energy storage devices were subjected to initial charge-discharge under the following conditions. In a thermostatic chamber at 25°C, the energy storage devices were subjected to constant current charge at a charge current of 1.0C and an end-of-charge voltage of 4.20 V, and then to constant voltage charge at 4.20 V With regard to the charge termination conditions, the charge was performed until the total charge time reached 3 hours. Thereafter, a pause period of 10 minutes was provided. The energy storage devices were subjected to constant current discharge at a discharge current of 1.0 C and an end-of-discharge voltage of 2.50 V

### (Initial direct-current resistance)

The respective energy storage devices subjected to the initial charge-discharge were subjected to constant current charge at a charge current of 1.0C in a thermostatic chamber at 25 °C to the SOC of 50%. Thereafter, the energy storage devices were, in a thermostatic chamber at 25°C, discharged for 30 seconds at each of discharge currents of 0.2 C, 0.5 C, and 1.0 C in this order. After completion of each discharge, the energy storage devices were subjected to constant current charge at a charge current of 0.05 C to the SOC of 50%. The relationship between the discharge current and the voltage at 10 seconds after the start of the discharge at each of the discharge currents was plotted, and the direct-current resistance was determined as an initial direct current resistance from the slope of a straight line obtained from three points plotted.

### (Charge-discharge cycle test)

Subsequently, the following charge-discharge cycle test was performed. In a thermostatic chamber at 60°C, the energy storage devices were subjected to constant current constant voltage charge at a charge current of 1.0 C and an end-of-charge voltage of 4.20 V With regard to the charge termination conditions, the charge was performed until the total charge time reached 3 hours. Thereafter, a pause period of 10 minutes was provided. The energy storage devices were subjected to constant current discharge at a discharge current of 1.0 C and an end-of-discharge voltage of 2.50 V, and then, a pause period of 10 minutes was provided. This charge-discharge was performed for 1000 cycles.

### (Rate of increase in direct-current resistance)

After the charge-discharge cycle test, the direct-current resistance for each of the energy storage devices was determined as a direct-current resistance after the charge-discharge cycle test by the same method as for the "Initial direct-current resistance" mentioned above. From the initial direct-current resistance and the direct-current resistance after the charge-discharge cycle test, the rate of increase in direct-current resistance after the charge-discharge cycle test was determined. The rate of increase in direct-current resistance (DCR increase rate) is shown in Table 1.

**[Table 1]**

| | | | | Example 1 | Example 2 | Comparative Example 1 | Comparative Example 2 | Comparative Example 3 | Comparative Example 4 |
|---|---|---|---|---|---|---|---|---|---|
| Positive composite paste | Ratio in solid content | Positive active material (NCM) | % by mass | 94.5 | 94.5 | 94.5 | 94.5 | 94.5 | 92.5 |
| | | Particulate conductive agent (CB) | % by mass | 3.4 | 3.4 | 3.4 | 3.4 | 4.0 | 5.0 |
| | | Fibrous conductive agent (CNT) | % by mass | 0.6 | 0.6 | 0.6 | 0.6 | - | - |
| | | Binder (PVDF) | % by mass | 1.5 | 1.5 | 1.5 | 1.5 | 1.5 | 2.5 |
| | Addition order | | - | CNT+PVDF | CNT+PVDF | CNT+PVDF | CB+PVDF | Together | Together |
| | | | | →NCM | →NCM | →NCM | →NCM | | |
| | | | | →CB+PVDF | →CB+PVDF | →CB+PVDF | →CNT+PVDF | | |
| | Mixing method | | - | High-speed mixing after addition of NCM | High-speed mixing after addition of all components | Low-speed mixing after addition of NCM | High-speed mixing after addition of all components | Low-speed mixing | Low-speed mixing |
| Positive active material layer | Total pore volume | | mL/g | 0.10 | 0.10 | 0.10 | 0.10 | 0.10 | 0.11 |
| | Median pore diameter | | nm | 108 | 124 | 75 | 122 | 79 | 151 |
| | First peak position | | nm | 62 | 62 | 62 | 61 | 62 | 62 |
| | First peak height | | mL/g | 0.0638 | 0.0569 | 0.0655 | 0.0521 | 0.0597 | 0.0960 |
| | Second peak position | | nm | 280 | 333 | 266 | 341 | 266 | 431 |
| | Second peak height | | mL/g | 0.0657 | 0.0624 | 0.0632 | 0.0629 | 0.0664 | 0.0900 |
| | Peak height ratio (second peak/first peak) | | - | 1.03 | 1.10 | 0.96 | 1.21 | 1.11 | 0.94 |
| Evaluation | DCR increase rate | | % | 26.2 | 27.3 | 30.1 | 33.2 | 29.9 | 47.1 |

In each of the energy storage devices according to Examples 1 and 2 with the positive active material layer containing the particulate conductive agent and the fibrous conductive agent, the median pore diameter of 100 nm or more, and the peak height ratio (second peak/first peak) of 1.20 or less, the rate of increase in direct-current resistance was a low value of 28% or less. In contrast, in each of the energy storage devices according to Comparative Example 1 with median pore diameter less than 100 nm, Comparative Example 2 with the peak height ratio (second peak/first peak) more than 1.20, and Comparative Examples 3 and 4 with the positive active material layers containing no fibrous conductive agent, the rate of increase in direct-current resistance was a high value over 28%.

In addition, in the preparation of the positive composite paste containing the positive active material, the particulate conductive agent, and the fibrous conductive agent, Comparative Example 1 in which the hybrid mixer was used was insufficient in mixing the dispersion, and thus, for example, the fibrous conductive agent was insufficiently dispersed, thereby resulting in the small value of the median pore diameter. In Comparative Example 2 in which the fibrous conductive agent was added to the dispersion including the positive active material and the particulate conductive agent, for example, many of the voids between particles of the particulate conductive agent were occupied by the fibrous conductive agent, thereby resulting in the large value of the peak height ratio (second peak/first peak). In contrast, in Examples 1 and 2, before adding the particulate conductive agent, the positive active material and the fibrous conductive agent were mixed, then, the particulate conductive agent was added thereto, and the mixing was sufficiently performed with the thin-film spin system high-speed mixer. Thus, in Examples 1 and 2, the voids between particles of the particulate conductive agent are presumed not to be much occupied by the fibrous conductive agent, and the positive active material is presumed to have been covered with the fibrous conductive agent sufficiently dispersed, thus resulting in the median pore diameter of 100 nm or more, and the peak height ratio of 1.20 or less.

### INDUSTRIAL APPLICABILITY

The present invention can be applied to energy storage devices, positive electrodes included therein, and the like for use as power sources for electronic devices such as personal computers and communication terminals, automobiles, and the like.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A positive electrode for an energy storage device, comprising a positive active material layer containing a positive active material, a particulate conductive agent, and a fibrous conductive agent,
wherein
the fibrous conductive agent is 60 nm or less in diameter,
a pore volume distribution of the positive active material layer has a median pore diameter of 100 nm or more,
a Log differential pore volume distribution curve determined from the pore volume distribution has a first peak that appears in a pore diameter range of 10 nm or more and less than 100 nm, and a second peak that appears in a pore diameter range of 100 nm or more and less than 2000 nm, and a ratio of a height of the second peak to a height of the first peak (second peak/first peak) is 1.20 or less.

2. The positive electrode for an energy storage device according to claim 1, wherein the first peak has a height of 0.054 mL/g or more.

3. The positive electrode for an energy storage device according to claim 1 or 2, wherein a content of the fibrous conductive agent with respect to the positive active material may be 0.10% by mass or more and 2% by mass or less.

4. The positive electrode for an energy storage device according to claim 1 or 2, wherein the particulate conductive agent is carbon black, and the fibrous conductive agent is fibrous carbon.

5. An energy storage device comprising the positive electrode for an energy storage device according to claim 1 or 2.

6. An energy storage apparatus comprising two or more energy storage devices, and comprising one or more energy storage devices each including the positive electrode for an energy storage device according to claim 1 or 2.
